Europäisches Patentamt

European Patent Office

Office européen des brevets

(19)

(11) Veröffentlichungsnummer : **0 524 178 B1**

(12)                                    **EUROPÄISCHE PATENTSCHRIFT**

(45) Veröffentlichungstag der Patentschrift :
22.06.94 Patentblatt 94/25

(51) Int. Cl.$^5$ : **F16D 65/092**

(21) Anmeldenummer : **91903843.0**

(22) Anmeldetag : **12.02.91**

(86) Internationale Anmeldenummer :
**PCT/EP91/00273**

(87) Internationale Veröffentlichungsnummer :
**WO 91/13268 05.09.91 Gazette 91/21**

(54) **BREMSKLOTZ MIT ABGESCHRÄGTEM BELAG.**

(30) Priorität : **01.03.90 DE 4006369**

(43) Veröffentlichungstag der Anmeldung :
**27.01.93 Patentblatt 93/04**

(45) Bekanntmachung des Hinweises auf die
Patenterteilung :
**22.06.94 Patentblatt 94/25**

(84) Benannte Vertragsstaaten :
**DE ES FR GB IT NL**

(56) Entgegenhaltungen :
**DE-A- 2 314 135**
**DE-A- 2 712 049**
**DE-A- 2 919 537**
**FR-A- 2 312 690**

(73) Patentinhaber : **ITT Automotive Europe GmbH**
**Guerickestrasse 7**
**D-60441 Frankfurt (DE)**

(72) Erfinder : **DREILICH, Ludwig**
**Altkönigstrasse 1**
**D-6232 Bad Soden 3 (DE)**
Erfinder : **SCHMELING, Hans-Joachim**
**Burgweg 6D**
**D-6110 Dieburg (DE)**
Erfinder : **HACH, Karl-Heinz**
**Brunnengasse 12**
**D-6101 Modaultal 3 (DE)**

EP 0 524 178 B1

**Beschreibung**

Die Erfindung betrifft einen Bremsklotz für eine Scheibenbremse nach dem Oberbegriff von Patentanspruch 1.

An Teilbelag-Scheibenbremsen tritt besonders beim neuen Belag während der ersten Bremsungen (Einlaufen der Beläge) ein verstärktes Belagausheben in radialer Richtung auf. Dies kann vielfach auf eine ungünstige Toleranzsituation zurückzuführen sein, indem die verwendeten Bremsen nicht (mehr) den geforderten Toleranzen genügen oder die gekauften Beläge nicht hinreichend zu den verwendeten Bremsen passen. Einen wesentlichen Einfluß am Belagausheben haben die von ihrer Größe her unterschiedlichen, sich radial und tangential über den Belag verteilenden Reibungskräfte, die aus ungleichmäßiger Belaganpressung der Belagoberfläche an die Bremsscheibe resultieren. Das kann so weit gehen, daß nicht nur der Belag bis zu dem vorgesehenen Anschlag ausgehoben wird, sondern erhebliche Kräfte über dem Belag auf das Bremsengehäuse wirken, die versuchen, dieses in radialer Richtung aus seiner Führung zu heben. In extremen Fällen kann das dazu führen, daß die Faust in die Laufkontur der darüberliegenden Radschüssel gehoben wird.

Ungleichmäßigkeiten in dem Einlauf- und Auslaufbereich der Beläge unterstützen zusätzlich das Belagausheben und dies insbesondere dann, wenn der Belag sich über einen relativ großen Sektorwinkel der Bremsscheibe erstreckt.

Die Problematik wird noch detaillierter in der DE-A-25 17 109 erörtert. Als Abhilfe ist es bereits bekannt, die Beläge in einer oberen Schicht an den in tangentialer Richtung seitlichen Rändern abzuschrägen. Derartige Abschrägungen wirken, wie in der DE-A-23 14 135 näher erläutert wird, auch einer Schiefstellung der Beläge gegenüber der Bremsscheibe entgegen.

Aus der FR-A-2 312 690 ist es auch bekannt, den unteren in tangentialer Richtung verlaufenden Rand zu Zwecken der Geräuschbekämpfung abzuschrägen.

Im Prinzip wird also beim Einlaufen eines neu eingebauten Bremsklotzes ein ralativ kleiner Teil des Belages abgeschliffen, um möglichst bald einen gleichmäßig und im richtigen Winkel an der Bremsscheibe anliegenden Belag zu erhalten, der dann eine erhöhte Lebensdauer hat.

Die Erfindung geht aus von einem Bremklotz der sich aus dem Oberbegriff des Hauptanspruchs ergebenden Gattung. Ein derartiger Bremsklotz ist aus DE-A-29 19 537 bekannt. Aufgabe der Erfindung ist es, die Lebensdauer der Bremsklötze zu verlängern und den Einlaufvorgang möglichst abzukürzen.

Die Erfindung wird durch die in dem kennzeichnenden Teil des Hauptanspruchs angegebene Nerkmalskombination gelöst. Die Erfindung besteht im Prinzip also darin, die Abschrägung derart auszugestalten, daß eine sehr starke degressive Abnutzung des abgeschrägten Belagteils erreicht wird. Vorteilhaft ist dabei, daß schon nach wenigen Bremsvorgängen eine recht gleichmäßige Belagoberfläche erreicht wird, so daß die folgenden Teile der abgeschrägten Schicht eine rasch wachsende Oberfläche haben können, was zu einer Verlängerung der Nutzungsdauer der Beläge führt. Umgekehrt läßt sich der mit der Erfindung zu erzielende technische Erfolg so beschreiben, daß bei den ersten Bremsungen die Höhe des jeweils abgeschliffenen Belaganteils gegenüber den bekannten abgeschrägten Belägen relativ groß ist, so daß schnell eine Korrektur der Belagoberfläche erreicht wird, während die Verschleißhöhe bei den folgenden Bremsbetätigungen gegenüber den bekannten abgeschrägten Belägen stark abnimmt. Insgesamt kommt man somit zu einem erheblich reduzierten Abriebvolumen für die abgeschrägte Schicht, so daß sich die Lebensdauer für den erfindungsgemäßen Bremsklotz erheblich vergrößert.

Die Form der Abschrägung läßt sich maschinell relativ leicht herstellen.

Eine weitere Präzisierung hierzu ergibt die Merkmalskombination nach Anspruch 2. Eine besonders vorteilhafte Ausgestaltung der Erfindung ergibt sich durch die Anwendung der Merkmalkombination nach Anspruch 3, bei der die erfindungsgemäße Abschrägung gleichzeitig noch dazu ausgenutzt wird, Toleranzen oder die nachteilige Wirkung ungleichmäßiger Auflagekräfte auf den Bremsklotz (z.B. Schrägstellung des Bremsklotzes) zu beseitigen. Dabei läßt sich dieses Merkmal gemäß den Ansprüchen 4 und 5 auch an dem tangentialen oberen Rand und/oder den beiden seitlichen Rändern gezielt einzeln oder in Kombination anwenden.

Ein Ausführungsbeispiel der Erfindung wird nachfolgend anhand der Zeichnung erläutert.

Darin zeigt

Fig. 1 einen Bremsklotz mit einem an drei Bereichen abgeschrägten Belag,

Fig. 2 einen Schnitt durch den Bremsklotz in Höhe der Strichlinie B-B in Fig. 1, wobei die den Schnitt andeutende Strichelung bei dem Belag zur besseren Nachstellung weggelassen wurde und

Fig. 3 eine geschnittene Darstellung entsprechend Fig. 2 längs der Linie A-A in Fig. 1.

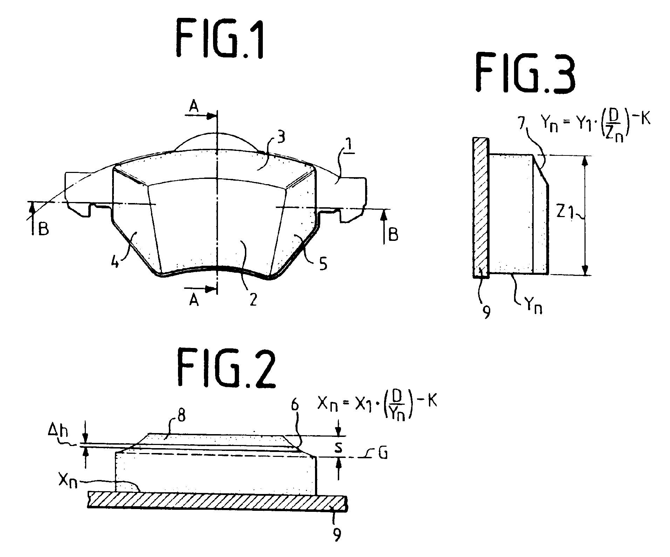

Fig. 1 zeigt einen Bremsklotz 1 mit einem Belag 2 auf der Rückenplatte 9, der in den beiden seitlichen Randzonen 4 und 5 und in der oberen in Umfangsrichtung verlaufenden Randzone 3 abgeschrägt wurde.

Aus Fig. 2 ist die Kontur 6 der Abschrägung in den Seitenbereichen 4,5 zu erkennen, wobei diese hyperbolisch geformt ist. In Fig. 2 ist auch die bei einem einmaligen Bremsvorgang durch Abrieb sich ergebende Verschleißhöhe Δ h angedeutet, die zusammen mit der zugehörigen Länge $x_n$ und der zugehörigen Höhe z1 das bei dem jeweiligen Bremsvorgang abgeriebene Volumen ergeben.

Zur Vereinfachung der Verhältnisse wird angenommen, daß bei gleicher aufgewendeter Kraft jeweils auch das gleiche Volumen durch die Bremsscheibe am Belag abgerieben wird. Gegenüber den bekannten linearen Abschrägungen ist bei der erfinderischen Abschrägung am oberen Ende der abgeschrägten Schicht 8 die Kontur stark geneigt und im Extremfall senkrecht, während am unteren Ende der Schicht die Kontur 6 sehr viel weniger geneigt ist und im Extremfall in eine parallel zur Trägerplatte verlaufende Linie übergeht. Dementsprechend sind die Verschleißhöhen Δ h am oberen Ende der Schicht 8 sehr groß, während sie am unteren, längs der gestrichelten Linie G verlaufenden Ende der Schicht 8 sehr klein sind, gleiche Bremskräfte jeweils vorausgesetzt.

Fig. 3 zeigt in entsprechender Weise einen Schnitt längs der Linie A-A, in der ebenfalls eine hyperbolisch verlaufende Kontur 7 der Abschrägung in radialer Richtung gezeigt ist, die dem abgeschrägten Randbereich 3 entspricht.

## Patentansprüche

1. Bremsklotz (1) für eine Scheibenbremse, bei dem eine obere Schicht (8) vorgegebener Stärke (S) des auf der Rückenplatte (9) aufgebrachten Belages (2) zumindest an einem seiner Randbereiche (3,4,5) abgeschrägt ist, dadurch **gekennzeichnet**, daß die Konturlinie (6,7) der Abschrägung einen im wesentlichen hyperbolischen Verlauf hat, wobei die Schicht (8) bei allen Bremsungen gleicher Kraft sowohl das gleiche Verschleißvolumen verliert als auch eine mit der Anzahl der durchgeführten Bremsungen abnehmende Verschleißhöhe (Δ h) je Bremsung aufweist.

2. Bremsklotz nach Anspruch 1, dadurch **gekennzeichnet**, daß die Konturlinie der Abschrägung der Gleichung $X_n = X_1 \cdot (\frac{D}{Y_n})^{-K}$ bzw. der Gleichung $Y_n = Y_1 \cdot (\frac{D}{Z_n})^{-K}$ gilt, wobei $X_n$ = die Belaglänge der augenblicklich vorhandenen Oberfläche der Schicht, gemessen von der Mittelebene des Belages in tangentialer Richtung,
$X_1$ = die Länge des Belages in tangentialer Richtung,
D = Belagdicke gesamt im Neuzustand, gemessen vom Boden des Belages bzw. der Trägerplatte,
$Y_n$ = die augenblickliche Höhe des Belages,
n = Anzahl der durchgeführten Bremsungen und
k = für den Belag typische Konstante als Verschleißexponent, wobei
$K \cong O$.

3. Bremsklotz nach einem der Ansprüche 1 oder 2, dadurch **gekennzeichnet,** daß die Abschrägung in eine Randzone (3,4,5) des Belages (2) gelegt ist, welche bei neu eingesetzten Belägen im Betätigungsfall einem besonders großen Auflagedruck gegenüber der Bremsscheibe ausgesetzt ist.

4. Bremsklotz nach Anspruch 3, dadurch **gekennzeichnet**, daß die Abschrägung in Umfangsrichtung verlaufend an den oberen Rand (3) des Bremsklotzes (1) gelegt ist.

5. Bremsklotz nach Anspruch 3 oder 4, dadurch **gekennzeichnet,** daß gegebenenfalls zusätzlich Abschrägungen (4,5) an dem seitlichen Rand bzw. den seitlichen Rändern des Belages (2) vorgesehen sind.

## Claims

1. A brake shoe (1) for a disc brake in which a top layer (8) of predetermined thickness (S) of the lining (2) being fixed onto the backplate (9) is chamfered at least at one of its marginal ranges (3, 4, 5), **characterized** in that the outline (6, 7) of the chamfer has a substantially hyperbolic course, with the layer (8) during all braking actions of equal force losing the same volume of wear and presenting a height of wear (Δ h) per braking action which decreases as the number of braking actions carried out increases.

2. A brake shoe as claimed in claim 1, **characterized** in that the outline (6, 7) of the chamfer follows the equation $X_n = X_1 \cdot (\frac{D}{Y_n})^{-K}$ or, respectively, the equation $Y_n = Y_1 \cdot (\frac{D}{Z_n})^{-K}$,

3

wherein $X_n$ = the lining length of the surface of the said layer existing at any moment as measured from the centre plane of the lining in tangential direction,

$X_1$ = the length of the lining in tangential direction,

D = the total thickness of the lining when new as measured from the bottom of the lining or the carrier plate, respectively,

$Y_n$ = the instantaneous height of the lining,

n = the number of the braking actions carried out, and

k = constant typical of the lining, as index of wear,

wherein $K \geqq 0$.

3. A brake shoe as claimed in claim 1 or 2,
   **characterized** in that the chamfer is positioned in a marginal range (3, 4, 5) of the lining (2) which in the case of newly mounted linings is subject to a particularly elevated pressing power in respect of the brake disc in the event of actuation.

4. A brake shoe as claimed in claim 3,
   **characterized** in that extending in circumferential direction the chamfer is positioned at the upper edge (3) of the brake shoe (1).

5. A brake shoe as claimed in claim 3 or 4,
   **characterized** in that possibly chamfers (4, 5) are additionally provided at the lateral edge or, respectively, at the lateral edges of the lining (2).

## Revendications

1. Plaquette de frein (1) pour frein à disque, dans laquelle une couche supérieure (8), d'une épaisseur (S) préfixée, de la garniture (2) placée sur la plaquette de support (9) est biseautée au moins sur l'une de ses zones marginales (3, 4, 5), caractérisée en ce que la ligne (6, 7) du profil du biseautage a un tracé pratiquement hyperbolique et en ce que, pour des freinages ayant tous la même force, la couche (8) perd le même volume d'usure et comporte, à chaque freinage, une hauteur d'usure ($\Delta$h) qui diminue avec le nombre des freinages exécutés.

2. Plaquette de frein suivant la revendication 1, caractérisée en ce que le ligne du profil du biseautage vérifie l'équation $X_n = X_1 . (D/Yn)^{-K}$, respectivement l'équation $Y_n = Y_1 . (D/Zn)^{-K}$, dans lesquelles :

   $X_n$ = la longueur de la surface de la couche de garniture qui se présente momentanément, mesurée à partir du plan médian de la garniture suivant la direction tangentielle,

   $X_1$ = la longueur de la garniture suivant la direction tangentielle,

   D = l'épaisseur de la garniture dans son ensemble à l'état neuf, mesurée à partir de la base de la garniture ou de la plaquette de support,

   $Y_n$ = la hauteur momentanée de la garniture,

   n = le nombre des freinages exécutés et

   K = une constante typique de la garniture et servant d'exposant d'usure,

   tandis que $K \geqq 0$.

3. Plaquette de frein suivant l'une des revendications 1 et 2, caractérisée en ce que le biseautage est effectué dans une zone marginale (3, 4, 5) de la garniture (2) qui, dans le cas de plaquettes nouvellement mises en place et dans le cas d'actionnement, est soumise à une pression d'application particulièrement grande contre le disque de frein.

4. Plaquette de frein suivant la revendication 3, caractérisée en ce que le biseautage est réalisé sur le bord supérieur (3) de la plaquette de frein (1) en s'étendant suivant la direction circonférentielle.

5. Plaquette de frein suivant l'une des revendications 3 et 4, caractérisée en ce qu'il est éventuellement prévu en sus des biseautages (4, 5) sur le bord latéral ou les bords latéraux de la garniture (2).

# FIG.1

# FIG.3

$$Y_n = Y_1 \cdot \left(\frac{D}{Z_n}\right) - K$$

# FIG.2

$$X_n = X_1 \cdot \left(\frac{D}{Y_n}\right) - K$$